# EUROPÄISCHE PATENTSCHRIFT

(11) **EP 1 977 877 B1**
(45) Veröffentlichungstag und Bekanntmachung des Hinweises auf die Patenterteilung: **14.12.2011**
(21) Anmeldenummer: 07007281.4
(22) Anmeldetag: 07.04.2007
(51) Int. Cl.: B29C 47/76

(54) **Extruder**
Extruder
Extrudeuse

(43) Veröffentlichungstag der Anmeldung: 08.10.2008
(73) Patentinhaber: Coperion GmbH, 70469 Stuttgart (DE)
(72) Erfinder: Sämann, Hans-Joachim, 74321 Bietigheim-Bissingen (DE); Wiedmann, Werner, Dr., 70499 Stuttgart (DE); Strecker, Jürgen, 70825 Korntal-Münchingen (DE); Heidemeyer, Peter, Dr., 70806 Kornwestheim (DE); Welb, Sören, 74360 Ilsfeld (DE)
(74) Vertreter: Rau, Manfred

(56) Entgegenhaltungen:
- GB-A- 1 227 150
- JP-A- 2002 210 805
- US-A- 4 578 455

## Beschreibung

Die Erfindung betrifft einen Extruder mit den Merkmalen des Oberbegriffs des Anspruches 1.

Ein derartiger Extruder ist aus der JP 2002-210805 bekannt. Als Vakuum-Gehäuse-Abschnitt ist hierbei ein normales Sieb vorgesehen, um eine Entlüftung des in großem Umfang Luft enthaltenden aufzubereitenden Schüttguts herbeizuführen. Die Bohrungen begrenzenden Innenwand des Vakuum-Gehäuse-Abschnitts hat fast den gleichen Durchmesser wie die Bohrung. Trotz der Möglichkeit einer Druck-Spülung des porösen Wandabschnitts besteht die Gefahr, dass die der Bohrung zugewandte Innenwand des porösen Wand-Abschnitts durch anplastifizierten Kunststoff zugesetzt wird und damit der gewünschte Effekt der Entlüftung zunichte gemacht wird. Derartiger anplastifizierter Kunststoff kann auch durch eine Druck-Spülung nicht beseitigt werden.

Aus der DE 33 10 676 A1 (entsprechend US 4 578 455 A) ist es bekannt, in einem Extruder einen porösen Wand-Abschnitt aus Sinter-Metall anzuordnen, dessen Innenwand die Bohrung des Extruders begrenzt. Der poröse Wand-Abschnitt wird mit Vakuum beaufschlagt, so dass eine Entlüftung der im Extruder zu behandelnden Materialien stattfindet. Die durch das Anplastifizieren von Kunststoff entstehenden Probleme treten auch hierbei auf.

Ein weiterer Extruder ist aus der DE 1 729 395 B (entsprechend GB 1 277 150) bekannt. Dort ist ein normales Sieb oder ein Filter aus Sinter-Material als Vakuum-Gehäuse-Abschnitt vorgesehen, um eine Entlüftung des in großem Umfang Luft enthaltenden aufzubereitenden Schüttguts herbeizuführen. Der poröse Wand-Abschnitt kann eben ausgebildet sein und in deutlichem Abstand von den Bohrungen im Gehäuse angeordnet sein. Alternativ kann dieser poröse Wand-Abschnitt in der Flucht der BohrungsWandungen angeordnet sein. Es hat sich gezeigt, dass in letzterem Fall die der Bohrung zugewandte Wand des porösen Wand-Abschnitts durch anplastifizierten Kunststoff zugesetzt wurde und damit der erwünschte Effekt der Entlüftung zunichte gemacht wurde. In ersterem Fall ist die Entlüftung weitgehend unterbunden worden.

Ein weiterer Extruder ist aus der DE 195 16 082 A1 bekannt. Dort wird von dem Grundproblem ausgegangen, dass die Eingabe von pulverförmigem Schüttgut in einen Extruder schwierig ist. Um auf den Einsatz von vorverdichtenden Beschickungseinrichtungen, z. B. Stopfschnecken, verzichten zu können, sind in der Einzugs-Zone bzw. Feststoff-Förder-Zone Öffnungen derart großen Durchmessers ausgebildet, dass aus ihnen durch anliegenden Unterdruck im Bereich von 0 bis 50% Gas und Feststoff austreten kann und soll. Der einzige Zweck dieser Unterdruck-Beaufschlagung ist die Entgasung des Schüttguts. Dadurch soll weiterhin vermieden werden, dass eine Rückwärtsentgasung über die Zuführ-Öffnung erfolgt, die ebenfalls die Schüttgut-Zufuhr behindert. Weiterhin kann in der EinzugsZone bereits ein Druck aufgebaut werden. Ein weiterer Vorteil soll darin liegen, dass im Bereich der dem Gas- und Materialaustritt dienenden Öffnungen eine Erhöhung des Reibbeiwertes am Gehäuse stattfindet. Von Nachteil ist, dass neben Gas auch ein Teil des pulverförmigen Feststoffs durch die Öffnungen abgezogen wird. Damit ist eine ausreichende Betriebssicherheit und Wirtschaftlichkeit nicht gewährleistet.

Aus der Veröffentlichung der "The Japan Steel Works, Ltd., Plastics Processing Technology News Letter", De - Gassing-Zylinder "DGC" - ist ein Extruder der gattungsgemäß vorausgesetzten Art bekannt, bei dem als gasdurchlässiger Wand-Abschnitt ein Filter eingesetzt wird, durch den Luft, aber auch große Mengen von Prozessgasen, wie z.B. Wasserdampf bei ABS und Holzmehl, abgezogen werden sollen. Auch hier wird ein Teil des Feststoffs durch die Filteröffnungen abgezogen. Im übrigen besteht auch die Gefahr des Verstopfens der Filteröffnungen durch das pulverförmige Schüttgut.

Aus der DE 32 20 916 A1 ist jeweils eine Walzenpresse zur Verdichtung von pulverförmigem oder feinkristallinem Schüttgut mit einem einem Walzenspalt unmittelbar vorgeordneten Schneckenförderer bekannt, wobei der Schneckenförderer ein Schneckengehäuse aufweist, das einen porösen Körper aufweist, durch den eine Absaugöffnung für die vor dem Walzenspalt durch Verdichtung des pulverförmigen Schüttguts freigesetzte Luft gebildet ist. Das ständige Absaugen der Luft unmittelbar vor den Walzen schafft die Voraussetzung für die angestrebte hohe Verdichtung des Schüttgutes im Walzenspalt. In dem Schneckenförderer erfolgt also eine Vorverdichtung des Pulvers und eine Zuführung unter Druck zum Walzenspalt. Der Schneckenförderer ist vollständig mit Schüttgut gefüllt.

Der Erfindung liegt die Aufgabe zugrunde, einen Extruder der gattungsgemäßen Art so auszugestalten, dass bei der Zugabe von pulverförmigem und insbesondere staubendem Schüttgut auch in einem teilgefüllten und damit im wesentlichen drucklosen Extruder ein störungsfreier Betrieb unter Erhöhung des bisher üblichen Durchsatzes solcher pulver- oder staubförmigen Schüttgüter erreicht wird.

Diese Aufgabe wird erfindungsgemäß bei dem Extruder der gattungsgemäßen Art durch die Merkmale im Kennzeichnungsteil des Anspruches 1 gelöst. Dadurch dass an dem gasdurchlässigen Wand-Abschnitt durch Unterdruck eine Schicht gleichmäßiger Dicke aus pulverförmigem Schüttgut erzeugt wird, ohne dass pulverförmiges Schüttgut nach außen abgesaugt wird, sind keine zusätzlichen Verfahrensschritte wie die Gas-Feststoff-Trennung und Rückführung des Schüttgutes wegen unerwünschten Schüttgutaustritts notwendig. Durch die Schüttgut-Schicht wird die Wandreibung erheblich erhöht, sodass die Förderung des Schüttguts wesentlich verbessert wird. Die Entgasung des in der teilgefüllten Einzugs-Zone als Feststoff geförderten Schüttguts erfolgt in üblicher Weise. Es erfolgt also keine signifikante Entgasung durch den gasdurchlässigen Wand-Abschnitt. Überraschenderweise hat sich gezeigt, dass ein Anplastifizieren und damit Zusetzen der der Bohrung zugewandten Wand des porösen Wand-Abschnitts nicht erfolgt. Andererseits erfolgt kein aktives Absaugen von Luft durch den porösen Wand-Abschnitt während des gesamten Aufbereitungsprozesses, so dass ein Verstopfen des porösen Wand-Abschnitts praktisch nicht eintritt. Durch eine angepasste Wahl des Sinter-Materials kann dies beeinflusst werden.

Die Unteransprüche geben vorteilhafte Ausgestaltungen wieder.

Weitere Merkmale, Einzelheiten und Vorteile der Erfindung ergeben sich aus der nachfolgenden Beschreibung eines Ausführungsbeispiels. Es zeigt
- Fig. 1: eine Extruder-Anlage mit einem Extruder im vertikalen Längsschnitt,
- Fig. 2: den Extruder nach Fig. 1 im horizontalen Längsschnitt,
- Fig. 3: eine Teil-Darstellung aus Fig. 1 in vergrößertem Maßstab,
- Fig. 4: einen Querschnitt durch den Extruder mit einer ersten Ausführungsmöglichkeit für einen gasdurchlässigen Wand-Abschnitt, und
- Fig. 5: einen Querschnitt durch den Extruder mit einer zweiten Ausführungsmöglichkeit für einen gasdurchlässigen Wand-Abschnitt.

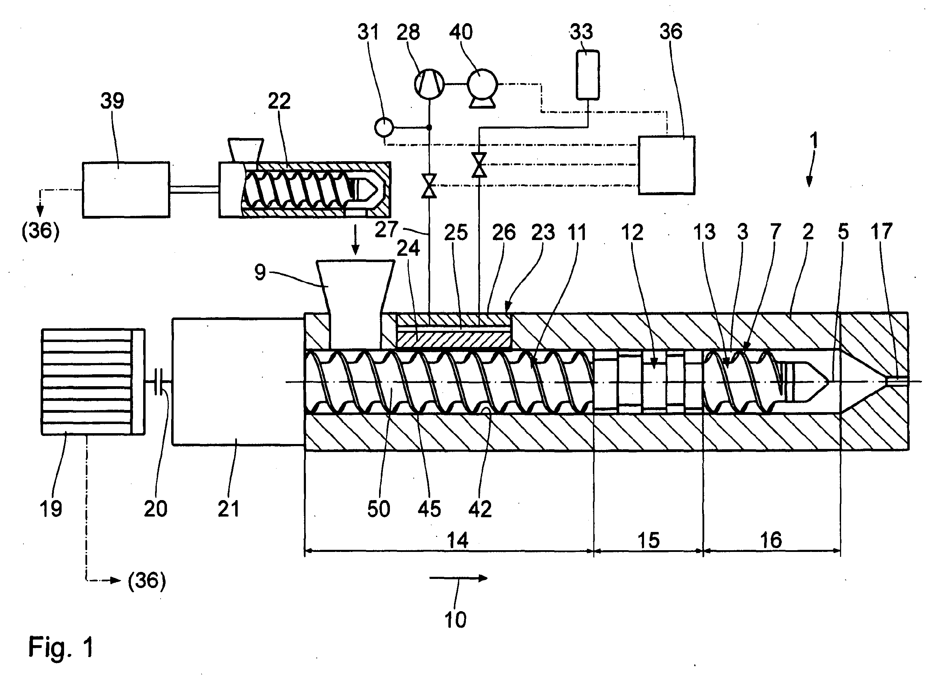

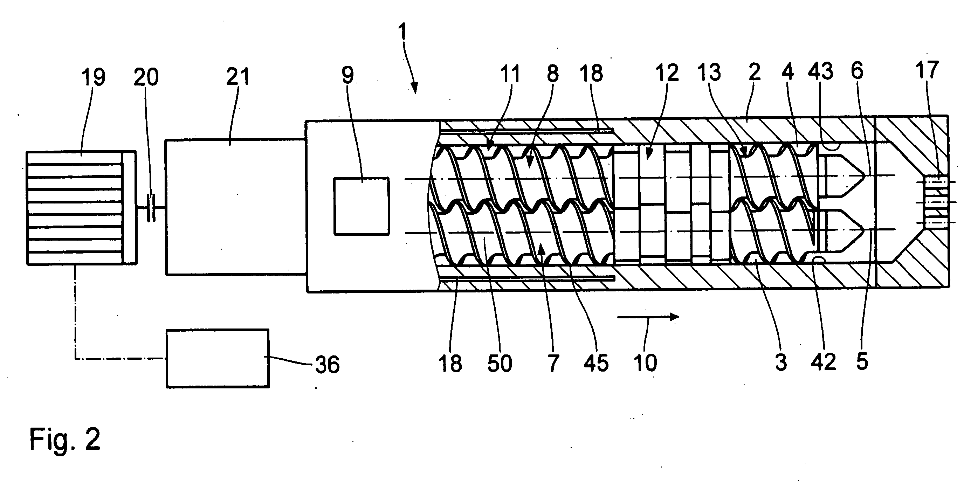

Die in der Zeichnung dargestellte Extruder-Anlage weist einen Extruder 1 auf. In dessen in der üblicherweise aus mehreren Gehäuseschüssen bestehendem Gehäuse 2 sind achtförmig ineinandergreifende Bohrungen 3, 4 ausgebildet, deren Achsen 5, 6 parallel zueinander verlaufen. In den Gehäuse-Bohrungen 3, 4 sind zwei Schnecken 7, 8 angeordnet. Die Schnecken sind als gleichsinnig drehende dicht kämmende Schnecken 7, 8 ausgebildet. An einem - in Fig. 1 und 2 linken - Ende mündet ein Zuführ-Trichter 9 in die Bohrungen 3, 4 ein. Ausgehend von dem Zuführ-Trichter 9 sind in Förderrichtung 10 die Schnecken 7, 8 mit einem ersten Förder-Schnecken-Abschnitt 11, daran anschließend einem Knet-Scheiben-Abschnitt 12 und wieder einem zweiten Förder-Schnecken-Abschnitt 13 versehen.

Der erste Förder-Schnecken-Abschnitt 11 erstreckt sich über eine als Feststoff-Förderzone wirkende Einzugs-Zone 14. Der Knet-Scheiben-Abschnitt 12 definiert hier eine Aufschmelz-Zone 15. Der zweite Förder-Schnecken-Abschnitt 13 definiert eine Druckaufbau-Zone 16. An die Druckaufbau-Zone 16 schließt am Ende des Gehäuses 2 eine Austritts-Düse 17 an. Wie weiterhin der Zeichnung entnehmbar ist, ist das Gehäuse 2 in einem begrenzten Abschnitt der Einzugs-Zone 14 mit Kühlkanälen 18 versehen.

Der Antrieb der Schnecken 7, 8 erfolgt mittels eines Elektro-Motors 19, der über eine Kupplung 20 mit einem Untersetzungs- und Verteiler-Getriebe 21 antriebsmäßig verbunden ist. An das Getriebe 21 sind wiederum die Schnecken 7, 8 in üblicher Weise angekoppelt.

Oberhalb des Zuführ-Trichters 9 ist eine Dosier-Einrichtung 22 angeordnet, die beispielsweise als gravimetrische Dosier-Schnecke ausgebildet ist.
Mit geringem Abstand, aber im Abstand hinter dem Zuführ-Trichter 9 weist das Gehäuse 2 einen Vakuum-Gehäuse-Abschnitt 23 auf, der sich also über einen Teilabschnitt der Einzugs-Zone 14 erstreckt. Der Vakuum-Gehäuse-Abschnitt 23 weist einen inneren, die Bohrungen 3, 4 teilweise begrenzenden porösen Wand-Abschnitt 24 auf, der aus Sinter-Material besteht, in dem in der Zeichnung nicht erkennbare Kanäle ausgebildet sind, sodass der poröse Wand-Abschnitt 24 gasdurchlässig ist. An seiner Außenseite schließt sich an den porösen Wand-Abschnitt 24 ein Vakuum-Raum 25 an, der - selbstverständlich - nach außen durch eine Wand 26 abgeschlossen ist. Durch diese Wand 26 mündet eine Vakuum-Leitung 27 in den Vakuum-Raum 25. Die Vakuum-Leitung 27 ist an eine Vakuum-Quelle 28, beispielsweise eine Wasserring-Pumpe, angeschlossen.

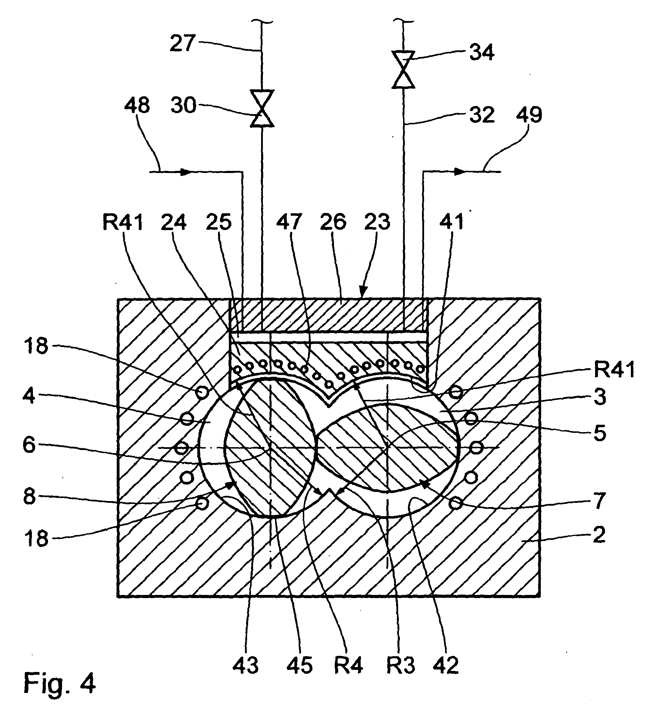

Gemäß Fig. 1 bis 4 können derartige Vakuum-Gehäuse-Abschnitte 23 die horizontal verlaufenden Bohrungen 3, 4 oben begrenzen. Sie sind also jeweils etwa parallel zu der durch die Achsen 5, 6 aufgespannten Ebene angeordnet. Bei der Ausgestaltung nach Fig. 1 bis 4 werden also beide Bohrungen 3, 4 gemeinsam über nur einen oberen porösen Wand-Abschnitt 24 mit Vakuum beaufschlagt.

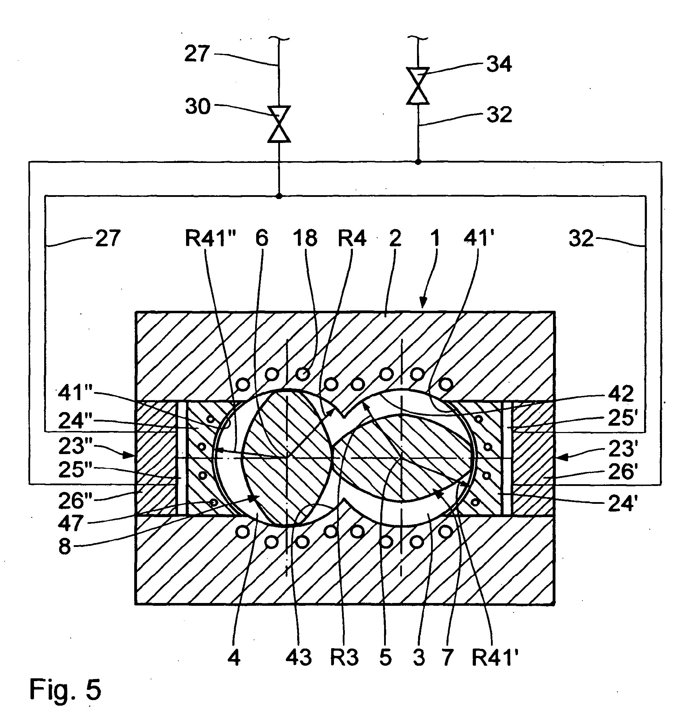

Bei der Ausgestaltung nach Fig. 5 ist schließlich jeweils ein Vakuum-Gehäuse-Abschnitt 23', 23" mit porösen Wand-Abschnitten 24' und 24" seitlich der Bohrungen 3 bzw. 4 angeordnet, und zwar links und rechts, das heißt die porösen Wand-Abschnitte 24' und 24" liegen also in der durch die Achsen 5, 6 aufgespannten Ebene.

Die übrigen in Fig. 5 enthaltenen Teile der Vakuum-Gehäuse-Abschnitte 23', 23", die den vergleichbaren Teilen bzw. Bereichen in den Fig. 1 bis 4 entsprechen, sind mit gleichen Bezugsziffern und jeweils einem hoch gesetzten Strich bzw. zwei hoch gesetzten Strichen bezeichnet.

In der Vakuum-Leitung 27 ist ein Vakuum-Steuer-Ventil 30 angebracht. Des Weiteren ist zwischen der Vakuum-Quelle 28 und dem Ventil 30 ein Druck-Mess-Gerät 31 angeordnet.

Weiterhin ist jeder Vakuum-Raum 25 mittels einer Druck-Spül-Leitung 32 mit einer Druckgas-Quelle 33 verbunden, wobei in die Leitung 32 ein Spül-Ventil 34 eingebaut ist. Das Druck-Mess-Gerät 31 gibt über eine Signal-Leitung 35 Mess-Signale, die dem jeweils in der Leitung 29 gemessenen Druck entsprechen, auf eine zentrale Steuerung 36. Von der zentralen Steuerung 36 wird wiederum das Vakuum-Steuer-Ventil 30 über eine Vakuum-Steuer-Leitung 37 angesteuert. Des Weiteren wird von der Steuerung über eine Leitung 38 das Spül-Ventil 34 angesteuert. Schließlich werden von der Steuerung auch der Antriebs-Motor 39 der Dosier-Einrichtung 22, der Antriebs-Motor 19 des Extruders 1 und der Motor 40 der Vakuum-Quelle 28 angesteuert.

Wesentlich ist, dass die die jeweilige Bohrung 3, 4 begrenzende poröse Innen-Wand 41, 41', 41 " der porösen Wandabschnitte 24 bzw. 24', 24" einen Teil-Kreisring-Querschnitt aufweist und gegenüber der jeweiligen Bohrungswand 42 bzw. 43 zurückversetzt ist, so dass gilt R3 = R4 < R41 (bzw. R41' bzw. R41"). Hierbei sind R3 und R4 die Radien der Bohrungen 3 bzw. 4 und R41, R41' und R41" die Radien der porösen InnenWände 41 bzw. 41' bzw. 41", und zwar jeweils gemessen von der entsprechenden Achse 5 bzw. 6. Durch diese Ausgestaltung wird also - im Vergleich zum Spiel 46 zwischen dem jeweiligen Kamm 45 und der Bohrungs-Wand 42 bzw. 43 - ein vergrößerter Spalt 44 bzw. 44' bzw. 44" zwischen dem jeweiligen Kamm 45 der Schnecken 7 bzw. 8 gegenüber der Innen-Wand 41 bzw. 41' bzw. 41" hergestellt. Dieser Spalt 44 bzw. 44' bzw. 44" hat also in radialer Richtung eine gleichbleibende Dicke D, für die gilt: D = R41 (bzw. R41' bzw. R41") - R4 (bzw. R3), wobei gilt: 2,0 mm ≤ D ≤ 30 mm. Je größer R3 bzw. R4 ist, also je größer der Extruder ist, umso größer wird auch D.

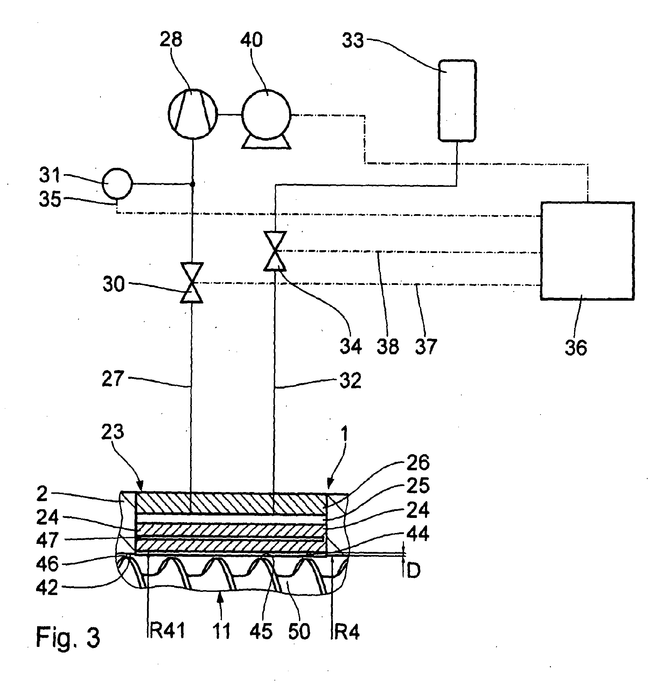

Wie den Fig. 3 bis 5 entnehmbar ist, sind auch in den Vakuum-GehäuseAbschnitten 23 bzw. 23', 23", und zwar den porösen Wand-Abschnitten 24 bzw. 24', 24", deren Versorgung mit Kühlmittel über eine Kühlmittelzuführleitung 48 und eine Kühlmittelabführleitung 49 erfolgt.

Die Betriebsweise ist wie folgt:
Über die Dosier-Einrichtung 22 wird pulverförmiges bzw. staubendes Schüttgut, zugegeben. Dieses pulverförmige Schüttgut kann ein Polymer sein, aber auch jedes andere auf mehrwelligen Extrudern zu verarbeitende Schüttgut. Die Zugabe des pulverförmigen Schüttguts und die Drehzahl der Schnecken 7, 8 werden so abgestimmt, dass der Extruder 1 mit Teil-Füllung betrieben wird.

Der bzw. die Vakuum-Gehäuse-Abschnitte 23 werden derart mit entsprechendem hier als Vakuum bezeichnetem Unterdruck beaufschlagt, dass das pulverförmige Schüttgut in diesem Bereich in einer Schicht mit einer dem Spiel 44 zwischen Schneckenkamm 45 und Innenwand 41 der Wand-Abschnitte 24 entsprechenden Dicke an dem bzw. den porösen Wand-Abschnitten 24 festgehalten wird. Dies erhöht die Reibung zwischen dem zu fördernden Schüttgut und der Innenseite 33, was wiederum zu einer Erhöhung der Schüttgut-Förderung führt. Da die in den porösen Wand-Abschnitten 24 ausgebildeten, in der Zeichnung nicht erkennbaren Kanäle kleiner sind als die Korngröße des zu fördernden Schüttguts, wird letzteres nicht in die porösen Wand-Abschnitte 24 hineingezogen, es erfolgt also keine Verstopfung dieser porösen Wand-Abschnitte 24. Allgemein gilt, dass die Weite der Kanäle in den porösen Wand-Abschnitten 24 unterhalb oder innerhalb des Bereichs der Korngrößen-Verteilung des Schüttguts liegt. Die Korngrößen-Verteilung des Schüttguts erstreckt sich regelmäßig über einen bestimmten Bereich von extrem feiner bis zu weniger feiner Korngröße. Auch die in den porösen Wand-Abschnitten 24 ausgebildeten Kanäle haben eine sich über einen bestimmten Bereich erstreckende Weite. Es wurde gefunden, dass eine Verstopfung dieser Kanäle wirksam vermieden werden kann, wenn sich der Durchmesser- bzw. Weiten-Bereich der Kanäle in den porösen Wand-Abschnitten 24 innerhalb oder unterhalb der geschilderten Korngrößen-Verteilung befindet. Bei einer Korngrößenverteilung zwischen D10 = 30µm und D90 = 160 µm sind z. B. Kanalweiten von 15 bis 90 µm ausreichend. Mit der unteren Durchmesserangabe D10 ist angegeben, dass höchstens 10% des pulverförmigen Schüttgutes einen kleineren oder gleichen Durchmesser als den angegebenen, also 30 µm haben. Unter D90 ist zu verstehen, dass 90% der Schüttgut-Partikel einen Durchmesser haben, der kleiner oder gleich dem angegebenen Wert von 160 µm ist. Im vorliegenden Fall gilt: D50 = 75 µm. Bei einer derartigen Verteilung ist sichergestellt, dass eine ausreichend große Zahl von Partikeln (Körnern) des Schüttgutes bei Aufbringung des Vakuums sich von der Schneckenseite gegen die Kanal-Öffnungen legen, so dass ein Verstopfen der Kanäle nicht oder jedenfalls nicht in wesentlichem Umfang stattfindet.

Durch die porösen, also gasdurchlässigen Wand-Abschnitte 24 wird nur soviel Gas, i. d. R. also Luft oder Stickstoff, abgezogen, wie für die Erzeugung der erwähnten Schüttgut-Schicht durch Unterdruck notwendig ist. Wenn in stationärem Betriebs-Zustand des Extruders 1 an der jeweiligen Innenseite 33 der porösen Wand-Abschnitte 24 sich eine dichte bzw. verdichtete Schüttgut-Schicht gebildet hat, wird Luft bzw. Gas nur in einem sehr geringen Umfang abgezogen, ohne dass die gewünschte positive Wirkung auf die Förderung darunter leidet. Der Unterdruck im Spalt 44 dient nur dazu, das pulverförmige Material in diesem Spalt zu halten.

Die Verdichtung des Schüttguts im Bereich der Innen-Wand 41 bzw. 41', 41 " führt zu einer Reduzierung der Dichte des Schüttguts im Bereich des Schneckenkerns 50. Wenn unabhängig von der Einzugs-Zone 14 und außerhalb dieser Einzugs-Zone 14 eine weitere Verdichtung des pulverförmigen Schüttgutes, gegebenenfalls unter Aufschmelzen in der Zone 15 erfolgt, dann wird die in der teilgefüllten, als Feststoff-Förderzone dienenden Einzugs-Zone 14 vorhandene Luft durch Rückströmung in Richtung zum Zuführ-Trichter 9 abgeführt. Falls eine solche Verdichtung nicht erfolgt, kann ein Abströmen des eingeschleppten Gases auch in Förderrichtung 10 erfolgen.

Bei den stromab hinter der Einzugs-Zone 14 liegenden Verfahrens-Zonen 15, 16 und ggf. weiteren Verfahrens-Zonen, kann es sich beispielsweise um Zonen zum Aufschmelzen, Mischen, Homogenisieren, Kochen, Reagieren etc. handeln. Es kann sich aber auch um eine räumlich getrennte weitere Schneckenmaschine bzw. einen Extruder handeln.

Auch wenn es sich bei dem in der Einzugs-Zone 14 geförderten Schüttgut z.B. um pulverförmiges Polymer handelt, so besteht keine Gefahr, dass sich der poröse Wand-Abschnitt 24 bzw. dessen Innen-Wand 41 ungewollt durch Anplastifizieren des Polymers infolge Scherung zusetzt. Im Falle eines solchen Polymers könnte kein Unterdruck an der Innen-Wand 41 erzeugt werden. Diese Gefahr ist ausgeschlossen. Wie sich überraschenderweise gezeigt hat, wird ein Anplastifizieren des Polymers an der Innen-Wand 41 des Vakuum-Gehäuse-Abschnitts 23 durch den vergrößerten Spalt 44 wirksam unterbunden. Dies wird durch die Kühlung im Bereich der porösen Wand-Abschnitte 24 positiv beeinflusst.

Wenn doch einmal die porösen Wand-Abschnitte 24 vom staubförmigen Schüttgut zugesetzt werden, so wird dies von dem Druck-Mess-Gerät 31 angezeigt, wodurch wiederum von der Steuerung 36 ein Schließen des Vakuum-Steuer-Ventils 30 und ein Öffnen des Spül-Ventils 34 ausgelöst wird, so dass über die Druck-Spül-Leitung 32 eine Druckgas-Spülung in Form eines Druckstoßes der porösen Wand-Abschnitte 24 erfolgt.

Wie sich aus den zuvor geschilderten Ausführungsbeispielen ergibt, ist es ausreichend, das Vakuum nur über jeweils einen Teilbereich des Umfangs der Bohrungen 3, 4 aufzubringen und nur über einen kurzen Abschnitt 23 der Einzugs-Zone 14.

Unter Vakuum im Sinne dieser Anmeldung ist nicht ein absolutes Vakuum im physikalischen Sinne zu verstehen, sondern ein sehr niedriger Druck von beispielsweise 0,02 bis 0,2 bar, also ein Vakuum von 98 bis 80%.

## Patentansprüche

1. Extruder zur Aufbereitung von pulverförmigem Schüttgut,
- mit einem Gehäuse (2),
- mit mindestens einer Bohrung (3, 4), die
-- eine Bohrungs-Wand (42, 43) aufweist,
- mit einer an einem Ende des Gehäuses (2) angeordneten Zuführ-Öffnung (9) für das pulverförmige Material,
- mit jeweils einer in der mindestens einen Bohrung (3, 4) angeordneten Schnecke (7, 8), die
-- jeweils einen der Zuführ-Öffnung (9) nachgeordneten Förder-Schnecken-Abschnitt (11) zur Bildung einer Einzugs-Zone (14) und
-- mindestens einen dem Förder-Schnecken-Abschnitt (11) nachgeordneten Abschnitt (12) zur Weiterverarbeitung des Schüttguts
aufweist,
- mit einer der Zuführ-Öffnung (9) vorgeordneten Dosier-Einrichtung (22) zur Zuführung des pulverförmigen Schüttguts, die derart ausgebildet, dass der Extruder (1) mindestens in der Einzugs-Zone (14) mit Teil-Füllung betrieben wird,
- mit einem Vakuum-Gehäuse-Abschnitt (23) in der Einzugs-Zone (14), der einen gasdurchlässigen Wand-Abschnitt (24) mit einer Vielzahl von Kanälen und einer die mindestens eine Bohrung (3, 4) begrenzenden Innenwand (41) aufweist,
- mit einer mittels einer Druck-Spül-Leitung (32) an den gasdurchlässigen Wand-Abschnitt (24) angeschlossenen Druckgas-Quelle (33) und
- mit einem Antrieb (19) für die mindestens eine Schnecke (7, 8),
**dadurch gekennzeichnet,**
- **dass** der gasdurchlässige Wand-Abschnitt (24) aus porösem Sinter-Material ausgebildet ist und
- **dass** die Innenwand (41) des Wand-Abschnitts (24) die gegenüber der Bohrungs-Wand (42, 43) unter Bildung eines Spalts (44, 44', 44") mit einem Teil-Kreisring-Querschnitt zurückversetzt ist, wobei der Spalt (44, 44', 44") eine gleichbleibende Dicke D hat, wobei gilt: 2,0 mm ≤ D ≤ 30 mm.

2. Extruder nach Anspruch 1, **dadurch gekennzeichnet,**
**dass** die Kanäle im gasdurchlässigen porösen Wand-Abschnitt (24), insbesondere im Bereich der Innenwand (41), eine Weite aufweisen, die kleiner oder gleich der mittleren Korngröße des pulverförmigen Schüttguts ist.

3. Extruder nach einem der Ansprüche 1 oder 2, **dadurch gekennzeichnet,**
**dass** der Vakuum-Gehäuse-Abschnitt (23) mit Kühlkanälen (47) versehen ist.

4. Extruder nach einem der Ansprüche 1 bis 3, **dadurch gekennzeichnet,**
**dass** der Vakuum-Gehäuse-Abschnitt (23) oberhalb der mindestens einen Bohrung (3, 4) angeordnet ist.

5. Extruder nach einem der Ansprüche 1 bis 3, **dadurch gekennzeichnet,**
**dass** seitlich der mindestens einen Bohrung (3, 4) ein Vakuum-Gehäuse-Abschnitt (23', 23") vorgesehen ist.

6. Extruder nach einem der Ansprüche 1 bis 5, **dadurch gekennzeichnet,**
**dass** im Gehäuse (2) mindestens zwei zueinander parallele einander teilweise durchdringende Bohrungen (3, 4) ausgebildet sind.

7. Extruder nach Anspruch 5 und 6, **dadurch gekennzeichnet,**
**dass** jeweils seitlich jeder Bohrung (3, 4) ein Vakuum-Gehäuse-Abschnitt (23', 23") vorgesehen ist.

## Claims

1. Extruder for processing powdery bulk materials, comprising
- a housing (2);
- at least one bore (3, 4) that
-- has a bore wall (42, 43);
- a feed opening (9) for the powdery material which is disposed on one end of the housing (2);
- one screw (7, 8) each that is disposed in the at least one bore (3, 4) wherein said screw (7, 8) has
-- one screw conveyor portion (11) each that is disposed downstream of the feed opening (9) so as to form an inlet zone (14), and
-- at least one portion (12) that is disposed downstream of the screw conveyor portion (11) for processing the bulk material;
- a metering device (22) that is disposed upstream of the feed opening (9) for feeding in the powdery bulk material and that is designed such that the extruder (1) is operated with partial filling at least in the inlet zone (14);
- a vacuum housing portion (23) in the inlet zone (14) wherein said vacuum housing portion (23) has a gas-permeable wall portion (24) which has a multitude of ducts and an inner wall (41) that defines the at least one bore (3, 4);
- a pressure-gas source (33) that is connected to the gas-permeable wall portion (24) by means of a pressure purge line (32) and
- a drive (19) for the at least one screw (7, 8),
**characterized**
- **in that** the gas-permeable wall portion (24) consists of porous sinter material and
- **in that** the inner wall (41) of the wall portion (24) is set back with respect to the bore wall (42, 43), thereby forming a gap (44, 44', 44") with a partially annular cross-section, wherein the gap (44, 44', 44") has a constant thickness D to which applies: 2.0 mum ≤D ≤ 30 mm; and.

2. Extruder according to claim 1, **characterized**
**in that** the ducts in the gas-permeable porous wall portion (24), particularly in the vicinity of the inner wall (41), have a width that is smaller than or equal to the average grain size of the powdery bulk material.

3. Extruder according to one of the claims 1 or 2, **characterized**
**in that** the vacuum housing portion (23) is provided with cooling ducts (47).

4. Extruder according to one of the claims 1 to 3, **characterized**
**in that** the vacuum housing portion (23) is disposed above the at least one bore (3, 4).

5. Extruder according to one of the claims 1 to 3, **characterized**
**in that** a vacuum housing portion (23', 23") is provided on the side of the at least one bore (3, 4).

6. Extruder according to one of the claims 1 to 5, **characterized**
**in that** at least two parallel, partially inter-engaging bores (3, 4) are formed in the housing (2).

7. Extruder according to claim 5 and 6, **characterized**
**in that** one vacuum housing portion (23', 23") each is provided on the side of each bore (3, 4).

## Revendications

1. Extrudeuse pour la préparation de produit en vrac pulvérulent,
- comprenant un corps (2)
- comprenant au moins un alésage (3, 4) qui
-- présente une paroi d'alésage (42, 43),
- comprenant un orifice d'admission (9) de la matière pulvérulente, disposé à l'une des extrémités du corps (2),
- comprenant une vis (7, 8) attenante à au moins chaque alésage (3, 4) qui présente
-- chaque fois, une partie de vis transporteuse (11) attenante à l'orifice d'admission (9), pour l'organisation d'une zone d'alimentation (14) et
-- au moins une partie subsidiaire (12) après la partie de vis transporteuse (11) pour la poursuite de la mise en oeuvre du produit en vrac,
- comprenant un dispositif de dosage (22) disposé avant l'orifice d'admission (9) pour l'alimentation du produit en vrac pulvérulent, dispositif qui est conçu de telle sorte que l'extrudeuse est mise en route dans la zone d'alimentation (14) au moins avec un remplissage partiel,
- comprenant une partie du corps sous vide (23) dans la zone d'alimentation (14) qui présente une partie de la paroi perméable aux gaz (24) avec une multitude de canalisations et une paroi interne (41) délimitant au moins un alésage (3, 4),
- comprenant une source de gaz sous pression (33) couplée à la partie de paroi perméable aux gaz (24) au moyen d'une canalisation de rinçage sous pression (32) et
- comprenant un entraînement (19) pour au moins une vis (7, 8)
**caractérisée en ce**
- **que** la partie de paroi perméable aux gaz (24) est constituée d'un matériau fritté poreux et
- **que** la paroi interne (41) de la partie de paroi (24) qui est espacée d'une fraction de section transversale circulaire en face de la paroi d'alésage (42, 43) avec la formation d'une fente (44, 44', 44"), la fente (44, 44', 44") ayant une épaisseur D restant constante, où on a : 2,0 mm ≤ D ≤ 30 mm.

2. Extrudeuse selon la revendication 1 **caractérisée en ce**
**que** les canalisations dans la partie de paroi poreuse perméable aux gaz (24) présentent une largeur, en particulier dans la zone de la paroi interne (41), qui est inférieure ou égale à la taille moyenne des grains du produit en vrac pulvérulent.

3. Extrudeuse selon les revendications 1 ou 2 **caractérisée en ce**
**que** la partie du corps sous vide (23) est munie de canalisations de refroidissement (47).

4. Extrudeuse selon l'une des revendications de 1 à 3 **caractérisée en ce**
**que** la partie du corps sous vide (23) est disposée au dessus d'au moins un alésage (3, 4).

5. Extrudeuse selon l'une des revendications de 1 à 3 **caractérisée en ce**
**qu'**une partie du corps sous vide (23', 23") soit prévue des deux côtés d'au moins un alésage (3, 4).

6. Extrudeuse selon l'une des revendications de 1 à 5 **caractérisée en ce**
**qu'**au moins deux alésages (3, 4), traversant partiellement de part en part, parallèle l'un à l'autre, soient formés dans le corps (2).

7. Extrudeuse selon les revendications 5 et 6 **caractérisée en ce**
**que** chaque fois, des deux côtés de chaque alésage (3, 4) une partie du corps sous vide (23', 23") soit prévue.
